# EUROPÄISCHE PATENTANMELDUNG

(11) **EP 0 965 830 A2**
(43) Veröffentlichungstag der Anmeldung: **22.12.1999**
(21) Anmeldenummer: 99440118.0
(22) Anmeldetag: 21.05.1999
(51) Int. Cl.: G01M 11/00

(54) **Methode zur Messung von Störungseffekten auf Glasfaserübertragungsstrecken sowie Übertragungssystem**

(30) Priorität: 20.06.1998 DE 19827638
(71) Anmelder: ALCATEL, 75008 Paris (FR)
(72) Erfinder: Bülow, Henning Dr., 70597 Stuttgart (DE); Schmuck, Harald, 70825 Korntal Münchingen (DE)
(74) Vertreter: Rausch, Gabriele, Dr.

(57) **Zusammenfassung**

Es wird eine Methode zur Messung von Störungseffekten auf einer Glasfaserübertragungsstrecke, die aufgrund von Polarisationsmodendispersion hervorgerufen werden, vorgeschlagen, wobei eine optische Lichtquelle ein seitenbandmoduliertes Signal in die Übertragungsstrecke einspeist, das Signal übertragen wird und an einem kohärenten Empfänger das Signal bei einer Frequenz, die der Modulationsfrequenz des seitenbandmodulierten Signals entspricht, ausgewertet wird.

## Beschreibung

Die Erfindung geht aus von einer Methode zur Messung von Störungseffekten einer Glasfaserübertragungsstrecke sowie einem Übertragungssystem nach der Gattung der unabhängigen Ansprüche. In den Proceedings II, NOC '97, Antwerpen, H. Bülow, Seite 65-72 werden die Effekte der Polarisationsmodendispersion beschrieben. Polarisationsmodendispersion tritt aufgrund von doppelbrechenden Effekten in den für die Übertragungstrecken eingesetzten Glasfasern auf. Dabei wird das Lichtsignal in zwei Bestandteile entsprechend der schnellen und der langsamen Achse der Polarisationszustände aufgeteilt, wobei diese beiden Anteile mit unterschiedlichen Gruppengeschwindigkeiten über die Glasfaserstrecke übertragen werden. Durch die unterschiedlichen Gruppengeschwindigkeiten der beiden Signalanteile kommt es zu Interferenzen und im allgemeinen Fall zu Störungen der Dateninformationen. Der Effekt der Polarisationsmodendispersion ist ein statistischer Effekt, da die Glasfasern aufgrund ihrer Temperatur, ihres Dehnungszustandes sowie durch Alterungseffekte unterschiedliches Verhalten aufweisen. Die Änderung der Polarisationsmodendispersion ist im allgemeinen ein langsamer Vorgang, der in längeren Zeitabschnitten erfolgt. Dadurch ist es nicht notwendig, die Effekte der Polarisationsmodendispersion permanent für eine Übertragungsstrecke zu messen.

Aus der US 5 473 457 ist ein Verfahren zur Messung der Polarisationsmodendispersion bekannt. Nach diesem Verfahren wird das Lichtsignal über eine Faser übertragen, und anschließend der Polarisationszustand in einem Polarisationscontroller gemessen. Anschließend wird das Signal auf eine polarisationserhaltende Faser gegeben. Dann werden die beiden Polarisationsebenen des Lichts in einer Vorrichtung getrennt und kohärent überlagert. Das Signal dient zur Einstellung des Polarisationscontrollers. Auf diese Weise wird aktiv auf den Polarisationszustand des Signals eingewirkt.

Die erfindungsgemäße Methode zur Messung von Störungseffekten, die aufgrund von Polarisationsmodendispersion hervorgerufen werden mit den kennzeichnenden Merkmalen des unabhängigen Anspruchs, hat demgegenüber den Vorteil, daß eine einfache Messung eines aus zwei Frequenzbändern bestehenden Ausgangssignals an einem kohärenten Empfänger ein Maß für die Effekte der liefert, das zur weiteren Auswertung zur Verfügung steht. Diese Methode verzichtet gänzlich auf den Einsatz von Polarisationscontrollern, sowie Polarisationsmessungen, und polarisationserhaltenden Fasern, alles optische Bauelemente, die einen großen Aufwand und große Kosten verursachen. Durch den Einsatz der erfindungsgemäßen Methode ist eine einfache Messung der Eigenschaften der Übertragungsstrecke auf rein elektrischem Weg möglich.

Durch die in den Unteransprüchen aufgeführten Maßnahmen sind vorteilhafte Weiterbildungen und Verbesserungen der im unabhängigen Anspruch angegebenen Methode möglich. Durch den Einsatz dieser Messmethode und dem Einsatz einer hohen Frequenz z. B. von 60 GHz kann mit der Hilfe einer kohärente Meßmethode am Empfänger die PMD bestimmen. Die erfindungsgemäße Methode wird vorteilhafterweise nicht den gesamten Übertragungszeitraum eingesetzt, da die Polarisationsmodendispersion langsame Veränderungen der Eigenschaften der Übertragungsstrecke beinhaltet. Da ist es von Vorteil, nur einen Modulator einzusetzen, der als Messeinheit zumindest zeitweise ein seitenbandmoduliertes Signal erzeugt und so ein für die Messung auswertbares Signal liefert.

Weiterhin ist an der Methode vorteilhaft, daß sie online eingesetzt werden kann und so ständige Übertragung der seitenbandmodulierten Signale zur statistischen Erfassung und Auswertung ermöglicht.

Das erfindungsgemäße Übertragungssystem bestehend aus einem optischen Sender, einer Übertragungsstrecke und einem optischen Empfänger hat den Vorteil, daß mit einem Modulator die Seitenbänder für das Meßsignal erzeugt werden, während ein zweiter Modulator die Signale für die Daten aufbereitet. Eine weitere vorteilhafte Ausführungsform verwendet einen Modulator, sowohl zur Erzeugung der Seitenbanden als auch zur Datenmodulation.

Ein Ausführungsbeispiel der Erfindung ist in der Zeichnung dargestellt und in der nachfolgenden Beschreibung mehr erläutert.

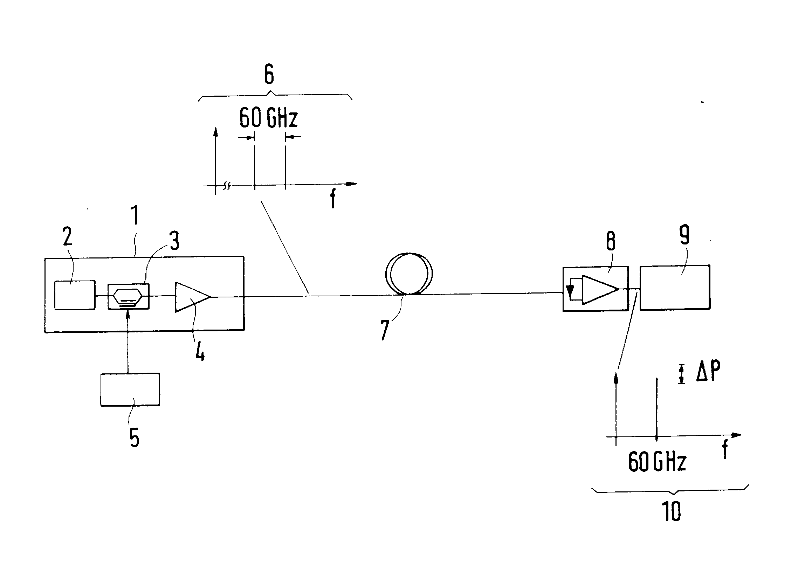

Figur 1 zeigt ein erfindungsgemäßes Übertragungssystem. Ein optischer Sender (1) ist mit einer Übertragungsstrecke (7) verbunden. Im optischen Sender (1) befindet sich ein Laser (2), dessen Ausgang mit dem Eingang eines Modulators (3) verbunden ist. Der Modulator (3) weist einen weiteren Eingang auf, der mit einem externen Oszillator (5) in Verbindung steht. Der Ausgang des Modulator (3) ist eingangsseitig an einen optischen Verstärker (4) angekoppelt, dessen Ausgang mit der Übertragungsstrecke (7) verbunden ist. Am Ende der Übertragungsstrecke (7) befindet sich eine Photodiode (8) mit gegebenenfalls einem elektrischen Verstärker, deren Ausgang an einem PC (9) angeschlossen ist. Die optische Quelle (1) besteht aus einem Laser (2), der mittels Zweiseitenband-Modulation zwei optische Träger mit einem Frequenzabstand von 60 GHz erzeugt, siehe Ausschnitt 6. Durch kohärente Detektion wird empfängerseitig an der Photodiode (8) ein elektrischer Träger bei 60 GHz erzeugt, siehe Ausschnitt 10. Die Leistung dieses Trägers bei 60 GHz ist abhängig von dem Polarisationszustand der beiden optischen Träger, genauer dem Skalarprodukt der beiden Felder. Durch die Polarisationsmodendispersion verändert sich der Polarisationszustand der Felder in den beiden optischen Trägern. Damit ändert sich auch die im Empfänger (9) detektierte elektrische Leistung. Damit ist die detektierte Leistung bei der Trägerfrequenz von 60 GHz ein Maß für die Änderung der Polarisationsmodendispersion auf der Übertragungsstrecke. Durch diese einfache Messung ist die Erfassung der momentanen Polarisationsmodendispersion der Übertragungsstrecke sowie eine Auswertung des statistischen Verhaltens der Glasfaserstrecke möglich. Die gemessene Leistung wird von einem PC (9) ausgewertet und aufbereitet. Durch diese Meßmethode ist ein zeitliches Erfassen von Änderungen in der Polarisationsmodendispersion bis zu Anderungsfrequenzen größer MHz möglich. Aktiv kann die Kenntnis um die Größe der Polarisationsmodendispersion für eine Kompensationsschaltung im Empfänger eingesetzt werden.

Voraussetzung für eine Messung ist der Einsatz von zwei, durch einen Frequenz Af getrennten Banden. Diese müssen weder gleich polarisiert sein, als auch keinen gleiche Leistungen aufweisen. Daher ist auch der Einsatz von zwei Laser als optischen Quellen möglich. Die Art der Herstellung der beiden Banden ist nicht von Bedeutung. Allein der Frequenzabstand zwischen den Banden ist wichtig, da die Auflösung des PMD Effektes bei hohen Frequenzen besser wird.

## Patentansprüche

1. Methode zur Messung von Störungseffekten auf einer Glasfaser-Überfragungssstrecke (7), die aufgrund von PolarisationsmodenDispersion hervorgerufen werden, dadurch gekennzeichnet, daß eine optische Lichtquelle (1) zwei Signale unterschiedlicher Frequenz in die Übertragungsstrecke (7) einspeist und diese Signale übertragen werden und daß an einem kohärenten Empfänger (8) die Signal bei der Frequenz (f), die der Differenz in der Frequenz der Signale entspricht, auswertet wird.

2. Methode zur Messung von Störungseffekten nach Anspruch 1, dadurch gekennzeichnet, daß eine optische Lichtquelle (1) ein seitenbandmoduliertes Signal (6) liefert das Signal in die Übertragungsstrecke (7) einspeist und übertragen wird und daß an einem kohärenten Empfänger (8) das Signal bei der Frequenz (f), die der Modulationsfrequenz des seitenbandmoduliertes Signals (6) entspricht, auswertet wird.

3. Methode zur Messung von Störungseffekten nach Anspruch 1, dadurch gekennzeichnet, daß eine optische Lichtquelle (1) aus zwei unabhängigen Lichtquellen besteht.

4. Methode für die Übertragung von Daten mit einem optischen Sender (1), einer Übertragungsstrecke (7) und einem Empfänger (8), wobei der optische Sender (1) mit mindestens einem Modulator (3) verbunden ist, dadurch gekennzeichnet, daß der optische Sender (1) zumindestens zeitweise zwei Signale erzeugt und daß der kohärente Empfänger (8) die Signale bei der Frequenz auswertet, die dem Abstand zwischen den Signalen entspricht und die gemessenen Leistung des gemessenen, kohärent überlagerten Signals zur Einstellung des gesamten Übertragungssystems verwendet.

5. Methode nach Anspruch 3 dadurch gekennzeichnet, daß die beiden frequenzunterschiedlichen Signale ständig übertragen werden.

6. Übertragungssystem bestehend aus einem optischen Sender (1), einer Übertragungsstrecke (7) und einem optischen Empfänger (8), dadurch gekennzeichnet, daß ein Modulator (3) zur Erzeugung der Seitenbanden und ein zweiter Modulator zur Datenmodulation im Sender vorhanden ist.

7. Übertragungssystem bestehend aus einem optischen Sender (1), einer Übertragungsstrecke (7) und einem optischen Empfänger (8), dadurch gekennzeichnet, daß ein Modulator sowohl zur Erzeugung der Seitenbanden als auch zur Datenmodulation im Sender (1) vorhanden ist.

8. Übertragungssystem bestehend aus einem optischen Sender (1), einer Übertragungsstrecke (7) und einem optischen Empfänger (8), dadurch gekennzeichnet, daß im optischen Sender zwei Laser als Quellen zur Erzeugung der beiden Frequenzbanden vorhanden sind.
